# EUROPEAN PATENT APPLICATION

(11) **EP 4 380 146 A1**
(43) Date of publication of application: **05.06.2024**
(21) Application number: 23786459.0
(22) Date of filing: 18.10.2023
(51) Int. Cl.: H04N 5/935, H04N 9/88

(54) **ELECTRONIC DEVICE AND METHOD FOR DISPLAY SYNCHRONIZATION**

(30) Priority: 20.10.2022 KR 20220135446; 28.11.2022 KR 20220161792
(71) Applicant: Samsung Electronics Co., Ltd., Suwon-si, Gyeonggi-do 16677 (KR)
(72) Inventor: KIM, Minwoo, Suwon-si, Gyeonggi-do 16677 (KR); KIM, Seungjin, Suwon-si, Gyeonggi-do 16677 (KR); KIM, Jihoon, Suwon-si, Gyeonggi-do 16677 (KR); LEE, Kimyung, Suwon-si, Gyeonggi-do 16677 (KR)
(74) Representative: HGF
(86) International application number: PCT/KR2023/016198
(87) International publication number: WO 2024/085665

(57) **Abstract**

The disclosure relates to an electronic device and method for display synchronization, and according to an embodiment, a software module (OS) of an electronic device may be configured to allocate a hardware resource needed for rendering the frame in response to a request for rendering a frame to be displayed in a display, to identify whether the frame is changed, to obtain, based on identifying a change of the frame, a changed system parameter of the frame, to obtain, from synchronization data , offset information set to correspond to the changed system parameter, and to output a software vertical synchronization signal set by applying the offset information. Other embodiments may also be possible.

## Description

### [Technical Field]

An embodiment of the disclosure relates to an electronic device and a method of synchronization of display.

### [Background Art]

As digital technologies have been developed, electronic devices have been provided in various types such as a smartphone, a tablet personal computer (PC), a personal digital assistant (PDA), or the like. Electronic devices have been developed in forms capable of being worn by users so that portability and user accessibility may be improved.

Various services and additional functions provided by electronic devices are gradually extended and diversified. To increase the effective values of electronic devices and to meet various desires of users, electronic devices have been continuously developed.

### [Detailed Description of the Invention]

### [Technical Solution]

To stably process and display an image in a display, an electronic device may generate a vertical synchronization signal (VERTICAL-SYNC) for synchronization of a timing of production of a frame by a system and a timing of a frame output by a display device. Generally, a vertical synchronization signal (VERTICAL-SYNC) is generated based on Frames Per Second (FPS) by hardware (H/W). In case that a display and a system (e.g., Central Processing Unit (CPU) and Graphics Processing Unit (GPU) operation) for processing a frame are not synchronized, tearing of an image may occur.

To improve the efficiency of a parallel operation of a graphic pipeline for synchronization between software components, the electronic device may generate a software vertical synchronization signal (S/W V-SYNC). In the electronic device, the system may receive a hardware vertical synchronization signal (H/W V-SYNC) via S/W according to an interrupt method, and may utilize the same as a synchronization signal of a graphics framework in the system.

After a hardware vertical synchronization signal (H/W V-SYNC) generated via hardware is detected according to a scheme such as interruption, a software vertical synchronization signal (S/W V-Sync) is processed via software by using a CPU, and thus the load on the system may be increased and performance may deteriorate, or, in case of a heat generation state, a time difference between a hardware vertical synchronization signal (H/W V-SYNC) and a software vertical synchronization signal (S/W V-Sync) may increase. Accordingly, a rendering time becomes short and the frequency of frame dropping may be increased.

According to an embodiment of the disclosure, there may be provided an electronic device and method of synchronization of display in order to improve system responsiveness.

According to an embodiment of the disclosure, an electronic device may include a memory including a software module, a display, and at least one processor electrically connected to the memory and the display.

According to an embodiment, the software module may be configured to, when executed by at least one processor, cause the electronic device to, based on a request for rendering a frame to be displayed in a display, allocate a hardware resource needed for rendering the frame. According to an embodiment, the software module may be configured to, when executed by at least one processor, cause the electronic device to identify whether the frame is changed, may obtain, based on identifying a change of the frame, a changed system parameter of the frame. According to an embodiment, the software module may be configured to, when executed by at least one processor, cause the electronic device to obtain, from the memory, offset information set to correspond to the changed system parameter. According to an embodiment, the software module may be configured to, when executed by at least one processor, cause the electronic device to output a software vertical synchronization signal set by applying the offset information.

According to an embodiment, an operation method of an electronic device may include an operation of allocating a hardware resource needed for rendering the frame in response to a request for rendering a frame to be displayed in the display. According to an embodiment, the operation method may include an operation of identifying whether the frame is changed. According to an embodiment, the operation method may include an operation of obtaining, based on identifying a change of the frame, a changed system parameter of the frame. According to an embodiment, the operation method may include an operation of obtaining, from a memory of the electronic device, offset information set to correspond to the changed system parameter and an operation of outputting a software vertical synchronization signal set by applying the offset information.

### [Brief Description of Drawings]

FIG. 1 is a block diagram illustrating an electronic device in a network environment according to various embodiments.
FIG. 2 is a diagram illustrating an example of the configuration of an electronic device for wireless communication according to an embodiment.
FIG. 3 is a diagram illustrating an example of the configuration of an electronic device for wireless communication according to an embodiment.
FIG. 4 is a diagram illustrating an example of an operation method of an electronic device according to an embodiment.
FIG. 5 is a diagram illustrating an example of a database of synchronization data in an electronic device according to an embodiment.
FIG. 6 is a diagram illustrating an example of an operation method of an electronic device according to an embodiment.
FIG. 7A is a diagram illustrating an example of output of a software vertical synchronization signal when frame dropping is improved in an electronic device according to an embodiment.
FIG. 7B is a diagram illustrating an example of output of a software vertical synchronization signal when frame dropping is not improved in an electronic device according to an embodiment.
FIG. 8 is a diagram illustrating an example of an operation method of an electronic device according to an embodiment.
FIG. 9A is a diagram illustrating an example of output of a software vertical synchronization signal when responsiveness is improved in an electronic device according to an embodiment.
FIG. 9B is a diagram illustrating an example of output of a software vertical synchronization signal when responsiveness is not improved in an electronic device according to an embodiment.

Identical or like reference numerals in the drawings denote identical or like component elements.

### [Mode for Carrying out the Invention]

Hereinafter, an electronic device according to various embodiments will be described with reference to the accompanying drawings. The term, "user", used in various embodiments may refer to a user who uses an electronic device or a device that uses an electronic device (for example, an artificial intelligence electronic device).

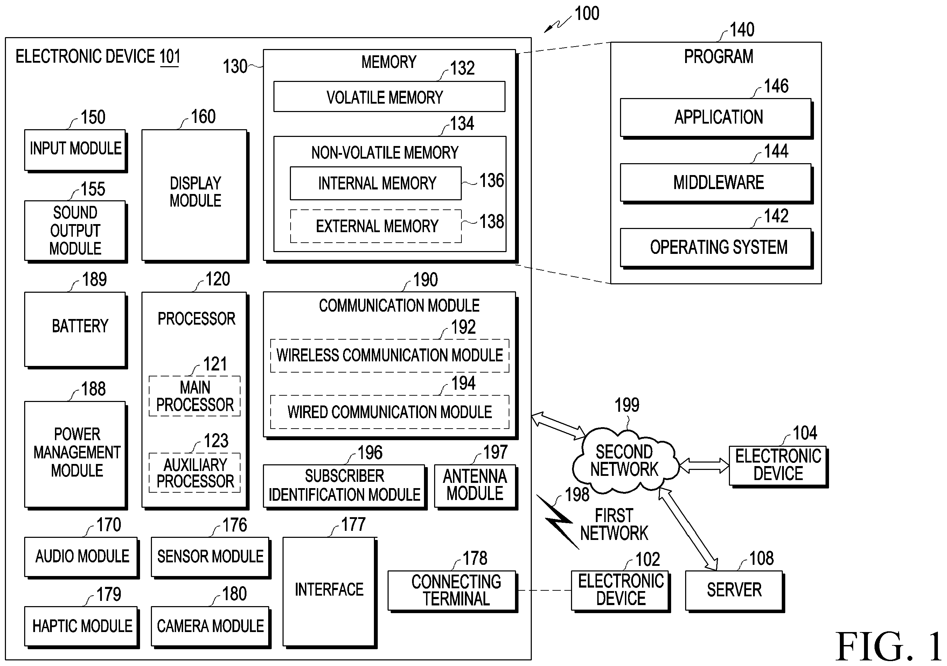

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing 1eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

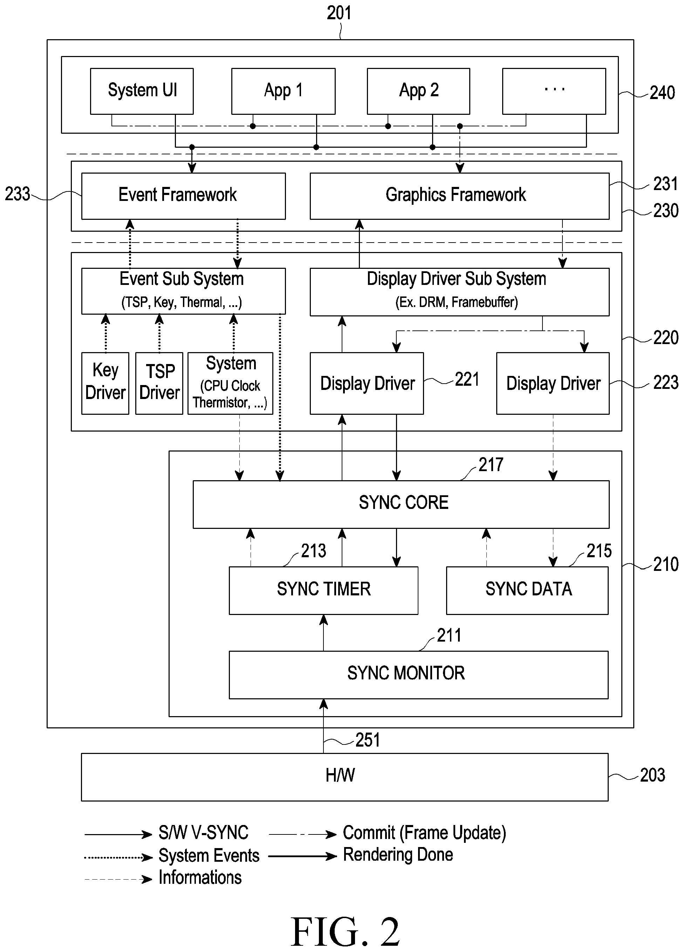

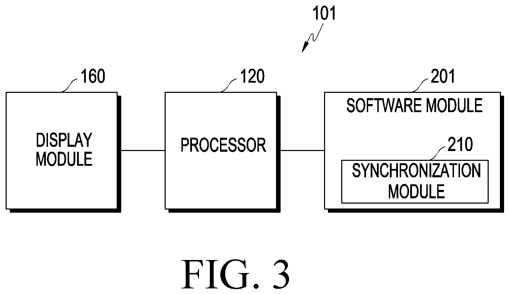

FIG. 2 is a diagram illustrating an example of the configuration of an electronic device according to various embodiments. FIG. 3 is a diagram illustrating the configuration of an electronic device according to an embodiment.

Referring to FIGS. 1, 2, and 3, the electronic device 101 according to an embodiment may implement a software module 201 (e.g., the program 140 of FIG. 1) to perform display synchronization for improving system responsiveness. The memory 130 of the electronic device 101 may store instructions for implementing the software module 201 of FIG. 2. The at least one processor 120 may implement instructions stored in the memory 130 in order to implement the software module 201 of FIG. 2, and may control hardware (e.g., the sensor module 176, the power management module 188, or the communication module 190 of FIG. 1) associated with a function of the software module 201.

According to an example of the embodiment, the software module 201 of the electronic device 101 may be configured to include a kernel (or HAL) 220 (e.g., the operating system 142 of FIG. 1), a framework 230 (the middleware 144 of FIG. 1), and an application 240 (e.g., the application 146 of FIG. 1). At least part of the software module 201 may be preloaded in the electronic device 101 or may be downloaded from a server (e.g., the server 108). The software module 201 may include a synchronization module 210 to perform display synchronization for improving system responsiveness. According to an embodiment, the synchronization module 210 may be included in the kernel 220, and may include a synchronization monitor 211, a synchronization timer 213, a synchronization data module 215, and a synchronization core 217.

According to an example of the embodiment, the kernel 220 may be configured to include, for example, an event sub system and a display driver sub system (display sub system). The kernel 220 may include a key driver, a Telephony Service Provider (TSP) driver, and a system for generating a CPU clock, which transmit system events to the event sub system, and the kernel 220 is not limited thereto but may be configured to further include another module (or another driver). The kernel 220 may be configured to include a display driver 221 and a GPU driver 223. The display driver 221 may receive a commit command (e.g., frame update) from the display driver sub system (display sub system) and may transfer the same to the synchronization module 210, and may transfer a software vertical synchronization signal (S/W V-SYNC) received from the synchronization module 210 to a framework 230 via the display driver sub system (display sub system). The GPU driver 223 may receive a commit command (e.g., frame update) from the display driver sub system (display sub system), may obtain information related to the graphics of a frame to be rendered via the commit, and may transfer the obtained information related to the graphics to the synchronization module 210.

According to an example of the embodiment, the framework 230 may be configured to include a graphics framework 231 and an event framework 233, and the framework 230 is not limited thereto but may be configured to further include another module. The framework 230 may provide a function that the application 240 needs in common, or may provide various functions to the application 240 via an application programming interface (API) (not illustrated) so that the application 240 is capable of efficiently using limited system resources in the electronic device 101. The graphics framework 231 may manage a process of rendering a frame displayed in a display of the display module 160. The event framework 233 may manage system events transferred from the event sub system of the kernel 220, and may manage system events received from the applications 240. The framework 230 may provide a module specialized for each type of operating system in order to provide a differentiated function. The framework 230 may dynamically remove part of the existing component elements, or may add new component elements.

According to an example of embodiment, the application 240 may be configured to include a system User Interface (UI) and applications (e.g., a module, a manager, or a program) related to image capturing, production, editing, or reproduction. The application 240 may be configured to further include a module (or an application) (not illustrated) for wireless communication with an external electronic device (e.g., the electronic device 102 and 104, or the server 108 of FIG. 1 or the like). The application 240 may include an application received from an external electronic device (e.g., the server 108, or the electronic device 102 or 104 or the like). According to an embodiment, the application 240 may include a preloaded application or a third-party application downloadable from a server. The illustrated component elements and the names of the component elements of the software module 201 according to an embodiment may differ based on the type of operating system.

According to an example of the embodiment, at least part of the software module 201 may be embodied as software, firmware, hardware, or a combination of two or more thereof. At least part of the software module 201 may be implemented (e.g., executed, performed) by, for example, a processor (e.g., an AP). At least part of the software module 201 may include, for example, at least one of a module, a program, a routine, a set of instructions, or a process for performing at least one function.

The processor 120 of the electronic device 101 (e.g., the electronic device 101 of FIG. 1) according to an embodiment may be electrically or operatively connected to the display module 160. The processor 120 may control execution (e.g., implementation) of the software module 201. The processor 120 may control execution of the system UI and/or applications included in the application 240 of the software module 201. According to an embodiment, the processor 120 may control the display module 160 so as to display an image associated with an application (for example, a thumbnail displayed on a home screen, or a UI of the application). According to control performed by the processor, the software module 201 may perform rendering (e.g., graphics processing) of frame data of an application image to be displayed, and may transfer a frame data rendering result to a frame buffer. The processor 120 may read the rendering result processed by the software module 201 from the frame buffer, and may control the display module 160 to display the same in the display. According to an example of the embodiment, the processor 120 may control execution of the software module 201 so as to start rendering frame data based on a software vertical synchronization signal generated by the synchronization module 210 of the software module 201. According to an example of the embodiment, the processor 120 may perform configuration so that a hardware vertical synchronization signal 251 (H/W V-SYNC) is generated in predetermined cycles, and may control the display module 160 so as to generate a hardware vertical synchronization signal in predetermined cycles. When a hardware vertical synchronization signal is generated, the processor 120 may control the display module 160 to display, in the display, a frame rendering result obtained by the software module 201.

Referring again to FIG. 2, according to an example of the embodiment, the graphics framework 231 of the software module 201 may receive, from the application 240, a request for rendering at least one frame (e.g., a frame data) of an image to be displayed in the display. Based on a frame rendering request, the graphic framework 231 may allocate a hardware resource needed for rendering a current frame (wherein the current frame is the frame currently being rendered), and may transfer, to the display driver 221, a commit command associated with the current frame that needs rendering. The display driver 221 may transfer the received commit command to the synchronization core 217. The graphics framework 231 may perform frame data processing by a central processing unit (CPU) and a graphics processing unit (GPU) via software (for example, the CPU and GPU may perform the frame data processing using software). In the case that the CPU and the GPU complete processing of the frame data (for example, at least one frame) within one period, a delay of displaying the frame may not occur since the frame is normally displayed in the display, for example, if the CPU and GPU complete processing of the frame data within a predefined or preset period (for example, a specified time period), there may be no delay in displaying the frame and the frame may be displayed as normal on the display. In the case that the CPU and the GPU are incapable of completing processing of the frame data (for example, at least one frame) within one period, a delay of displaying the frame may occur until the frame is normally displayed in the display, for example, if the CPU and GPU cannot complete processing of the frame data within the predefined or preset period, there may be a delay in displaying the frame on the display until the processing has been completed. In order to improve responsiveness by reducing occurrence of a delay, the graphics framework 231 may perform, based on a software vertical synchronization signal newly set by the synchronization module 210, frame data processing (e.g., rendering) via software so that the CPU and the GPU complete processing of the frame data (for example, at least one frame) within one period, for example, by performing the frame data processing based on the software vertical synchronization signal, the CPU and the GPU may complete the processing of the frame data within one period, thus improving responsiveness by reducing the occurrence of a delay in displaying the processed frame.

According to an example of the embodiment, the synchronization core 217 may obtain, based on the received commit command, graphics related information (e.g., graphics geometry information) of a current frame, may compare the obtained graphics related information of the current frame and graphics related information of a previous frame (e.g., a previously rendered frame), and may identify whether a difference exists between the current frame and the previous frame (for example, it may be determined that there is a difference in graphics geometry information between the current frame and the previous frame). For example, the graphics related information (e.g., the graphics geometry information) may include information associated with a point, a line, a plane, and a volume of a frame, the shape and size of a geometrical object such as a figure included in the frame, geometry information associated with a relative location and space of the geometrical object, or the address, size, and format (e.g., RGB, YcbCr) information of a frame buffer.

In the case that a difference between the current frame and the previous frame is present, the synchronization core 217 may identify that a frame is changed. In order to reduce a delay of a system response caused by a change of a frame, the synchronization core 217 may not generate a software vertical synchronization signal based on a cycle of a hardware vertical synchronization signal, and may transfer a command to the synchronization timer 213 so as to generate a new software vertical synchronization signal. The synchronization core 217 may obtain, based on information related to the current frame, offset information from the synchronization data module 215, and may transfer the obtained offset information to the synchronization timer 213. The synchronization core 217 may obtain offset information of an optimized software vertical synchronization signal of the current frame obtained by change, may classify the obtained offset information based on a current system parameter, and may store the same in the memory 130 by the synchronization data module 215. Here, a time at which a software vertical synchronization signal is generated may be earlier than a time at which the hardware vertical synchronization signal 251 is generated.

According to an example of the embodiment, the synchronization core 217 may identify whether frame dropping (frame drop) (for example, when a delay occurs when processing the frame data, leading to a delay in displaying the frame, or when the frame cannot be displayed at all) occurs in order to obtain offset information of a software vertical synchronization signal, and may obtain the frequency of occurrence of frame dropping and a delay time of frame dropping (for example, the time elapsed between when the frame should have normally been displayed and when the frame is displayed). The synchronization core 217 may classify, based on a predetermined system parameter, frame dropping-related information including the frequency of occurrence of frame dropping and an average time of the delay times of frame droppings, and a time difference average value (T_{diff} average) that is an average of time differences transferred from the synchronization timer 213, and may obtain, as synchronization data, the frame dropping-related information and time difference average value classified based on the predetermined system parameter. The synchronization data module 215 may store synchronization data in a database of synchronization data of the memory 130. For example, the predetermined system parameter may include at least one of FPS, a CPU clock, a GPU clock, or a heat generation state. The database of synchronization data may include frame dropping-related information (e.g., the frequency of frame dropping (%) and average time (usec)) and a time difference average value which are mapped to a system parameter (e.g., at least one of FPS, a CPU clock, a GPU clock, or a heat generation state).

According to an embodiment, in case that a quick response event (e.g., a user input, fingerprint recognition, facial recognition, or the like) occurs in an idle state, the synchronization core 217 may transfer, to the synchronization timer 213, a command for immediately generating a software vertical synchronization signal. Accordingly, the software module 201 may perform processing by using the synchronization core 217 so that a software vertical synchronization signal is immediately generated, as opposed to awaiting generation of a subsequent hardware vertical synchronization signal, and thus the system may immediately and quickly respond and system responsiveness may be improved.

According to an example of the embodiment, based on the information that is related to the current frame to be rendered and is received from the synchronization core 217, the synchronization timer 213 may set (e.g., generate, or determine) a new software vertical synchronization signal by applying offset information obtained from the database of synchronization data stored in the memory 130, and may output the set software vertical synchronization signal. The software vertical synchronization signal may be transferred to the display driver 221 via the synchronization core 217, and may be transferred from the display driver 221 to the graphics framework 231. The synchronization timer 213 may monitor the cycle of the software vertical synchronization signal, and may obtain a time difference value (T_{diff}) of the software vertical synchronization signal based on the hardware vertical synchronization signal. The time difference value (T_{diff}) may be a value indicating a time difference between the hardware vertical synchronization signal and the software vertical synchronization signal.

According to an embodiment, the synchronization monitor 211 may be operatively connected to the display module 160 of the hardware device 203, and may monitor a hardware vertical synchronization signal output from the display module 160. The synchronization monitor 211 may record a time at which a hardware vertical synchronization signal is output, and may provide the time at which the hardware vertical synchronization signal is output to another module of the software module 201.

As described above, the main component elements of an electronic device have been described with reference to the electronic device 101 of FIG. 1, FIG. 2, and FIG. 3 in an embodiment. However, in various embodiments, not all the component elements illustrated in FIG. 1, FIG. 2, and FIG. 3 are prerequisite, and the electronic device 101 may be implemented by more component elements than the illustrated component elements or the electronic device 101 may be implemented by fewer component elements. Also, the locations of the main component elements of the electronic device 101 which have been described with reference to FIG. 1, FIG. 2, and FIG. 3 may be changed according to various embodiments.

According to an embodiment, an electronic device (e.g., the electronic device 101 of FIG. 1, FIG. 2, and FIG. 3) may include a memory (e.g., the memory 130 of FIG. 1) including a software module (e.g., the software module 201 of FIG. 2 and FIG. 3), a display (e.g., the display module 160 of FIG. 1), and at least one processor (e.g., the processor 120 of FIG. 1) that is electrically connected to the memory and the display. The software module may be configured to, when executed by the at least one processor, cause the electronic device, based on a request for rendering a frame to be displayed in a display, to allocate a hardware resource needed for rendering the frame.

According to an embodiment, the software module may be configured to, when executed by the at least one processor, cause the electronic device to identify whether the frame is changed.

According to an embodiment, the software module may be configured to, when executed by the at least one processor, cause the electronic device to, based on identifying a change of the frame, obtain a changed system parameter of the frame.

According to an embodiment, the software module may be configured to, when executed by the at least one processor, cause the electronic device to obtain, from the memory, offset information set to correspond to the changed system parameter, and output a software vertical synchronization signal set by applying the offset information.

According to an embodiment, the offset information may include an average value of time difference value between a hardware vertical synchronization signal and the software vertical synchronization signal, and may be stored in the memory to correspond the system parameter and frame dropping-related information.

According to an embodiment, the software module may be configured to, when executed by the at least one processor, cause the electronic device to generate, based on occurrence of a quick response event, the software vertical synchronization signal, irrespective of a cycle of the hardware vertical synchronization signal.

According to an embodiment, the software vertical synchronization signal may be immediately output when a quick response event occurs by a synchronization timer included in the software module.

According to an embodiment, a time at which the software vertical synchronization signal is output may be earlier than a time at which the hardware vertical synchronization signal is output.

According to an embodiment, the software module may be configured to, when executed by the at least one processor, cause the electronic device to identify a change of the frame based on a change of a system parameter of the frame, a change in graphics related information of the frame, or occurrence of frame dropping.

According to an embodiment, the software module may be configured to, when executed by the at least one processor, cause the electronic device to monitor a hardware vertical synchronization signal and the software vertical synchronization signal, to obtain a time difference value between the hardware vertical synchronization signal and the software vertical synchronization signal, and to update, based on the time difference value, a time difference average value stored in the memory.

According to an embodiment, the software module may be configured to, when executed by the at least one processor, cause the electronic device to identify whether frame dropping occurs, to obtain, based on identifying occurrence of frame dropping, a frequency of frame dropping or an average time, to store the frequency of frame dropping and the average time in the memory to correspond to a system parameter based on the frame dropping, and to output a new software vertical synchronization signal by applying offset information set to correspond to the system parameter based on the frame dropping.

According to an embodiment, the system parameter may include at least one of FPS, a CPU clock, a GPU clock, or a heat generation state.

According to an embodiment, the software module may include a graphics framework configured to process rendering of the frame and a synchronization module. The synchronization module may include a synchronization core configured to identify, based on the frame rendering request, a change of the frame, and obtain the offset information, a synchronization timer configured to output the software vertical synchronization signal, a synchronization data module configured to manage the offset information, and a synchronization monitor configured to monitor the software vertical synchronization signal and a hardware vertical synchronization signal output from the display module.

An operation method of synchronization of display will be described with reference to the attached drawings so that an electronic device as illustrated in FIGS. 1 to 3 improves system responsiveness.

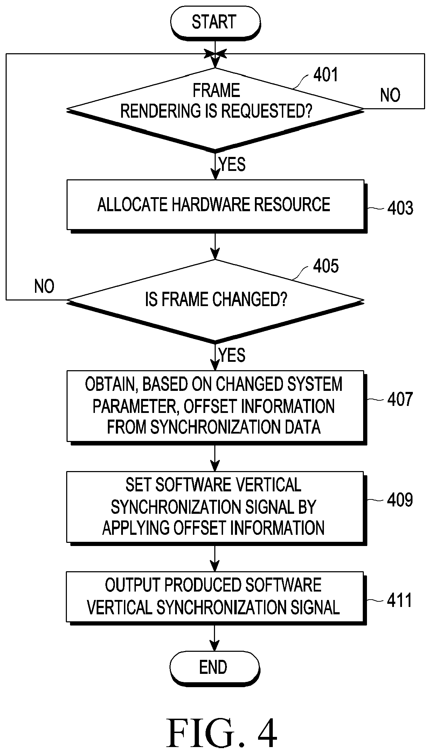

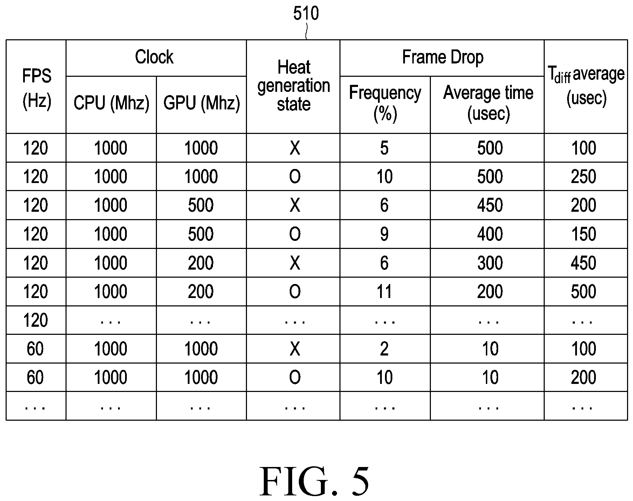

FIG. 4 is a diagram illustrating an example of an operation method in an electronic device according to an embodiment, and FIG. 5 is a diagram illustrating an example of a database of synchronization data in an electronic device according to an embodiment.

Referring to FIGS. 4 and 5, an electronic device (e.g., the electronic device 101 of FIG. 1, FIG. 2, and FIG. 3) according to an embodiment may identify that information displayed in a display (e.g., an image such as an object or a graphics element, or a figure) or a screen needs to be changed. For example, the electronic device 101 may identify that information displayed in the display or a screen is changed by a user request or screen update. In response to a request for changing a display (e.g., information being displayed, such as a UI) shown in the display, the electronic device may process via a software module (e.g., the software module 201 of FIG. 2 and FIG. 3), rendering of a frame that needs to be changed, and may perform operations illustrated in FIG. 4 for outputting a software vertical synchronization signal to which an offset is applied, in order to display the processed frame in the display.

In operation 401, the electronic device may identify, via a software module, whether rendering a frame that is to be displayed in the display is requested (or required) . In case that a result of the identification shows that frame rendering is requested, the electronic device may proceed with operation 403. Otherwise, the electronic device may proceed with operation 401 (for example, if it is determined that no frame rendering is requested, the electronic device may repeat operation 401. For example, operation 401 may be repeated until the identification shows that frame rendering is requested).

In operation 403, the electronic device may allocate, via the software module, a hardware resource needed for frame rendering.

In operation 405, the electronic device may identify (or determine or calculate), via the software module, whether a frame is changed. In case that a result of the identification shows that a change of a frame is identified, the electronic device may proceed with operation 407. In case that a change of a frame is not identified, the electronic device may proceed with operation 401. In response to the frame rendering request, the software module may obtain (or receive or generate) graphics related information (e.g., graphics geometry information) of a current frame and/or a system parameter (e.g., a predefined system parameter) (e.g., at least one of FPS, a CPU clock, a GPU clock, or a heat generation state) of the current frame, and may identify (or determine or calculate), based on the obtained graphics related information, a difference between the current frame and the previous frame (for example, referring to FIG. 2, graphics related information obtained of the current frame and graphics related information of the previous frame may be compared to identify whether a difference exists between the current frame and the previous frame). Based on identifying (or determining or calculating) the difference between the current frame and the previous frame and/or a change of the system parameter, the software module may identify that a frame is changed.

In operation 407, based on the system parameter of the current frame, the electronic device may obtain (or receive or generate), via the software module, offset information (e.g., frame dropping-related information and/or a time difference average value described with reference to FIG. 2)) from a database of synchronization data (e.g., a database 510 of synchronization data of FIG. 5) stored in a memory (e.g., the memory 130 of FIG. 1). For example, in case that the software module identifies that the previous frame is configured to have an FPS of 60Hz, and a CPU clock and GPU clock of 1000Mhz, and identifies that the FPS of the current frame is changed to 120Hz, the software module may identify that the system parameter of the current frame is changed. The software module may obtain offset information set to correspond to the changed system parameter from the database of the synchronization data (e.g., the database 510 of the synchronization data of FIG. 5). For example, in case that the FPS included in the system parameter of the current frame is 120Hz, a CPU clock and a GPU clock are 1000Mhz, and the state is not a heat generation state, the software module may obtain offset information (e.g., a time difference (T_{diff}) average value) configured as 100 seconds (sec) from the database 510 of synchronization data as illustrated in FIG. 5. As another example, in case that the FPS included in the system parameter of the current frame is 120Hz, a CPU clock and a GPU clock are 1000Mhz, and the state is a heat generation state, the software module may obtain offset information (e.g., a T_{diff} average value) configured as 250 seconds (sec) from the database 510 of synchronization data as illustrated in FIG. 5. In addition, in case that any one of the CPU clock, the GPU clock, or the heat generation state is changed, offset information configured based on the changed system parameter may be obtained (or received or generated) from the database 510 of synchronization data as illustrated in FIG. 5.

In operation 409, the electronic device may set, via the software module, a software vertical synchronization signal by applying (or using) the obtained offset information. In operation 411, the electronic device may output (e.g., occur), via the software module, the set software vertical synchronization signal.

According to an embodiment, via the software module, the electronic device may obtain a time difference value (T_{diff}) in association with data processing (e.g., rendering) performed on the current frame, and may configure or update, based on the same, offset information (e.g., a T_{diff} average value) of the system data.

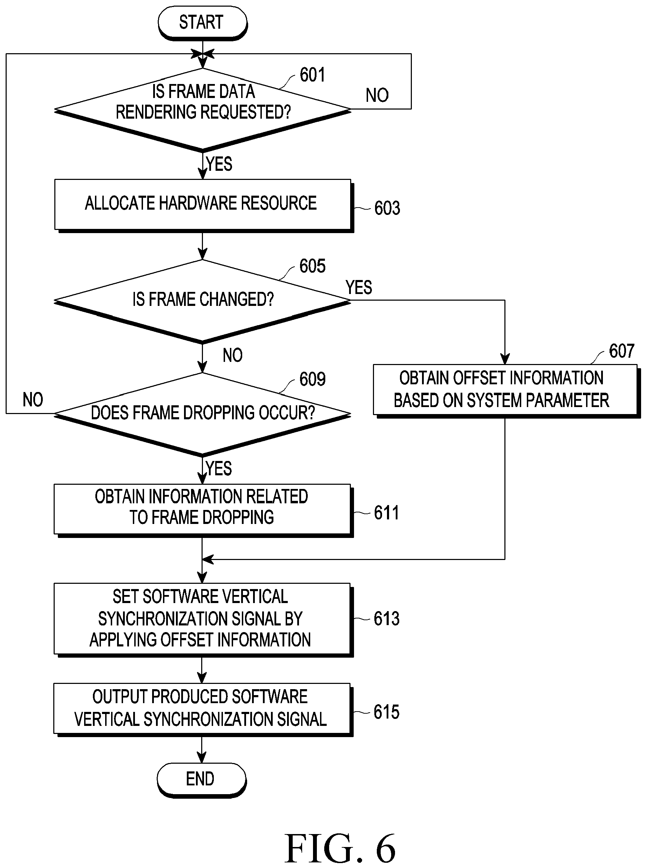

FIG. 6 is a diagram illustrating an example of an operation method of an electronic device according to an embodiment.

Referring to FIGS. 5 and 6, an electronic device (e.g., the electronic device 101 of FIG. 1 and FIG. 2) according to an embodiment may identify that information displayed in a display (e.g., an object or a graphics element) or a screen needs to be changed. For example, the electronic device 101 may identify that information displayed in the display or a screen is changed by a user request or screen update. In response to a request for changing a display shown in the display, the electronic device may process, via a software module (e.g., the software module 201 of FIG. 2 and FIG. 3), rendering of a frame that needs to be changed, and may perform operations illustrated in FIG. 6 for outputting a software vertical synchronization signal in order to display the processed (or rendered) frame in the display.

In operation 601, the electronic device may identify, via a software module, whether rendering of a frame to be displayed in the display is requested. In case that a result of the identification shows that frame rendering is requested, the electronic device proceeds with operation 603. Otherwise, the electronic device may proceed with operation 601 (for example, if it is not identified that frame rendering is requested, operation 601 may be repeated).

In operation 603, the electronic device may allocate, via the software module, a hardware resource needed for frame rendering.

In operation 605, the electronic device may identify, via the software module, whether a frame is changed. In case that a result of the identification shows that a change of a frame is identified, the electronic device proceeds with operation 607. Otherwise, the electronic device may proceed with operation 609. In response to the frame rendering request, the software module may obtain graphics related information of a current frame and/or a system parameter (for example, a predefined system parameter) of the current frame (and graphics related information and/or a system parameter of a previous frame), and may identify, based on the obtained graphics related information, a difference between the current frame and a previous frame (for example, referring to FIG. 2, graphics related information obtained of the current frame and graphics related information of the previous frame may be compared to identify whether a difference exists between the current frame and the previous frame). Based on identifying the difference between the current frame and the previous frame and/or a change of the system parameter, the software module may identify that a frame is changed.

In operation 607, upon identification of the change of a frame, the electronic device may obtain, based on the system parameter of the current frame, by using the software module, offset information from a database of synchronization data (e.g., the database 510 of synchronization data of FIG. 5) of a memory (e.g., the memory 130 of FIG. 1) stored by a synchronization data module (e.g., the synchronization data module 215 of FIG. 2). Subsequently, the electronic device may proceed with operation 613 via the software module. For example, in case that the software module identifies that the previous frame is configured to have an FPS of 60Hz, and a CPU clock and GPU clock of 1000Mhz, and identifies that the FPS of the current frame is changed to 120Hz, the software module may identify that the system parameter of the current frame is changed. The software module may obtain offset information set to correspond to the changed system parameter from the database 510 of synchronization data as illustrated in FIG. 5. For example, in case that the FPS included in the system parameter of the current frame is 120Hz, a CPU clock and a GPU clock are 1000Mhz, and the state is not a heat generation state, the software module may obtain offset information (e.g., a T_{diff} average value) configured as 100 seconds (sec) from the database 510 of synchronization data as illustrated in FIG. 5. As another example, in case that the FPS included in the system parameter of the current frame is 120Hz, a CPU clock and a GPU clock are 1000Mhz, and the state is a heat generation state, the software module may obtain offset information configured as 250 seconds (sec) from the database 510 of synchronization data as illustrated in FIG. 5. In addition, in case that any one of the CPU clock, the GPU clock, or the heat generation state is changed, offset information set to correspond to the changed system parameter may be obtained from the database 510 of synchronization data as illustrated in FIG. 5.

In operation 609, in case that a change of a frame is not identified, the electronic device may identify, via the software module, whether frame dropping occurs (for example, if there is a delay in the processing or rendering of frames, as described by reference to FIG. 2). In the case that a result of the identification shows that frame dropping occurs, the electronic device proceeds with operation 611. Otherwise, the electronic device may proceed with operation 601.

In operation 611, upon identification of the occurrence of frame dropping, the electronic device may obtain, via the software module, frame dropping-related information (e.g., a frequency of frame dropping and an average time of frame dropping (for example, an average time of the delay times of frame droppings)). The electronic device may obtain or update, via the software module, a frequency (%) of occurrence of frame dropping and an average time (usec) of frame dropping, and may store the frequency (%) and the average time (usec) of frame dropping in the database of synchronization data (e.g., the database 510 of synchronization data of FIG. 5) to correspond to the system parameter of the current frame. Based on the obtained or updated frequency and average time of frame dropping, the electronic device may obtain, via the software module, offset information, and may transfer the obtained offset information to a synchronization timer so that the synchronization timer set a new software vertical synchronization signal (that is to be output at a subsequent time).

The electronic device may set, via the software module, a software vertical synchronization signal by applying the obtained offset information in operation 613, and may output (e.g., occur) the set software vertical synchronization signal in operation 615.

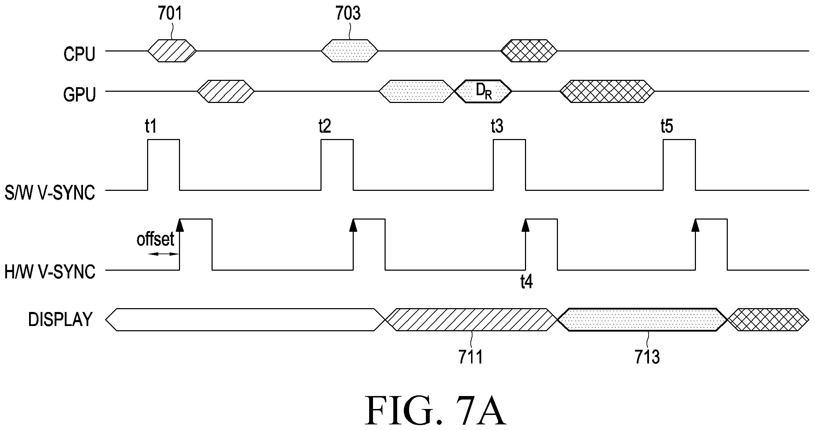

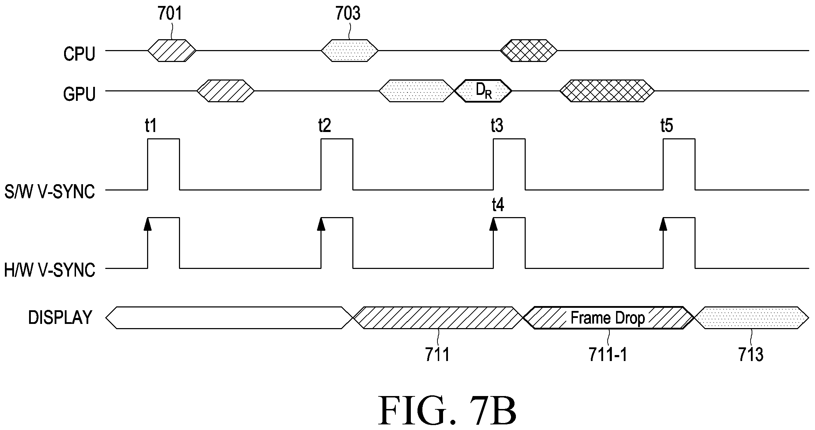

FIG. 7A is a diagram illustrating an example of output of a software vertical synchronization signal which is improved for frame dropping in an electronic device according to an embodiment, and FIG. 7B is a diagram illustrating an example of output of a software vertical synchronization signal when frame dropping is not improved in an electronic device according to an embodiment.

Referring to FIG. 7A, according to an embodiment, in response to a request for rendering a current frame (hereinafter, referred to as a first frame 701), a software module may output, at a first point in time (11), a software vertical synchronization signal to which offset information is applied, may start data processing (e.g., rendering) of the current frame at the first point in time, and may perform data processing of the first frame 701 until a subsequent software vertical synchronization signal is output. A CPU may calculate content to be displayed in association with data of the first frame 701 at the first point in time (11) at which the software vertical synchronization signal to which offset information is applied is output, and may transmit the same to a GPU when calculation is completed, and the GPU may perform frame data processing (e.g., conversion processing, combination processing, rendering processing) and may transfer a data processing result to a frame buffer area. The first frame 701, for which rendering begins at the first point in time (11), may be transferred to a display at a second point in time (t2) after rendering is completed. In case that a delay of D_{R} occurs in a second frame 703 for which rendering starts at a second point in time (t2), the second frame 703 may not be transferred to the display at the third point in time (t3) and the delay may continue up to a fourth point in time (t4). As illustrated in FIG. 7B, in case that offset information is not applied, the delay of D_{R} may cause delay of the transmission of a corresponding frame (e.g., the frame 703 of FIG. 7B) to the display up to a fifth point in time (t5), and thus frame dropping 711-1 may occur.

Comparing FIG. 7A and 7B, a software vertical synchronization signal to which offset information illustrated in FIG. 7A is applied may be output at a point (e.g., a first point in time (11)) that is offset information earlier than a point in time at which a hardware vertical synchronization signal is output. Accordingly, as illustrated in FIG. 7A, the data processing result 711 of the first frame 701 may be displayed, and a data processing result 713 of the second frame 703 which is a subsequent changed frame may be displayed without occurrence of frame dropping 711-1.

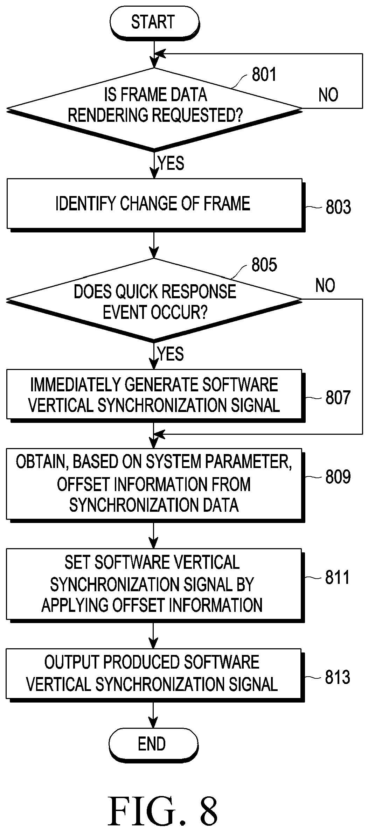

FIG. 8 is a diagram illustrating an example of an operation method of an electronic device according to an embodiment.

Referring to FIG. 8, an electronic device (e.g., the electronic device 101 of FIG. 1, FIG. 2, and FIG. 3) according to an embodiment may identify that information displayed in a display (e.g., an object or a graphics element or a figure or the like) or a screen needs to be changed. For example, the electronic device 101 may identify that information displayed in the display or a screen is changed by a user request or screen update or other determined requirement. In response to a request for changing display shown in the display, the electronic device may process, via a software module (e.g., the software module 201 of FIG. 2 and FIG. 3), rendering of a frame that needs to be changed, and may perform operations illustrated in FIG. 8 for outputting a software vertical synchronization signal in order to display the processed frame in the display.

In operation 801, the electronic device may identify (or determine or calculate), via a software module, whether rendering of a frame to be displayed in a display is requested. In the case that a result of the identification shows that frame rendering is requested, the electronic device proceeds with operation 803. Otherwise, the electronic device may proceed with operation 801 (for example, if it is not identified that frame rendering is requested, operation 801 may be repeated).

In operation 803, the electronic device may allocate, via the software module, a hardware resource needed for frame rendering.

In operation 805, the electronic device may identify, via the software module, whether a quick response event (for example, a user input, fingerprint recognition, facial recognition, or the like) occurs. In case that a result of the identification shows that the quick response event occurs, the electronic device proceeds with operation 807. Otherwise, the electronic device may proceed with operation 809.

In operation 807, the electronic device may immediately output, via the software module, a software vertical synchronization signal. The software module may transfer, to a synchronization timer (e.g., the synchronization timer 213 of FIG. 2), a command for immediately outputting a software vertical synchronization signal.

In operation 809, based on a system parameter of a current frame, the electronic device may obtain (or receive), via the software module, offset information from a database of synchronization data (e.g., the database 510 of synchronization data of FIG. 5) of a memory (e.g., the memory 130 of FIG. 1) stored by a synchronization data module (e.g., the synchronization data module 215 of FIG. 2). For example, in case that the software module identifies that a previous frame is configured to have an FPS of 60Hz, and a CPU clock and GPU clock of 1000Mhz, and identifies that the FPS of the current frame is changed to 120Hz, the software module may identify that the system parameter of the current frame is changed. The software module may obtain offset information set to correspond to the changed system parameter from the database 510 of synchronization data as illustrated in FIG. 5. For example, in case that the FPS included in the system parameter of the current frame is 120Hz, a CPU clock and a GPU clock are 1000Mhz, and the state is not a heat generation state, the software module may obtain offset information (e.g., a T_{diff} average) configured as 100 seconds (sec) from the database 510 of synchronization data as illustrated in FIG. 5. As another example, in case that the FPS included in the system parameter of the current frame is 120Hz, a CPU clock and a GPU clock are 1000Mhz, and the state is a heat generation state, the software module may obtain offset information (e.g., a T_{diff} average) configured as 250 seconds (sec) from the database 510 of synchronization data as illustrated in FIG. 5. In addition, in case that any one of the CPU clock, the GPU clock, or the heat generation state is changed, offset information set to correspond to the changed system parameter may be obtained from the database 510 of synchronization data as illustrated in FIG. 5.

The electronic device may set, via the software module, a software vertical synchronization signal by applying the obtained offset information in operation 811, and may output (e.g., occur) the set software vertical synchronization signal in operation 813.

According to an embodiment, via the software module, the electronic device may calculate a time difference value (T_{diff}) in association with data processing (e.g., rendering) performed on the current frame, and may configure or update offset information (e.g., a T_{diff} average value included in the database 510 of the synchronization data of FIG. 5) of the system data.

By the above-described operations of FIG. 8, the software module of the electronic device according to an embodiment may immediately output a software vertical synchronization signal, as opposed to recognizing a hardware vertical synchronization signal via software after the hardware vertical synchronization signal has been generated and outputting a software vertical synchronization signal, and thus a system immediately and quickly responds and system responsiveness may be improved.

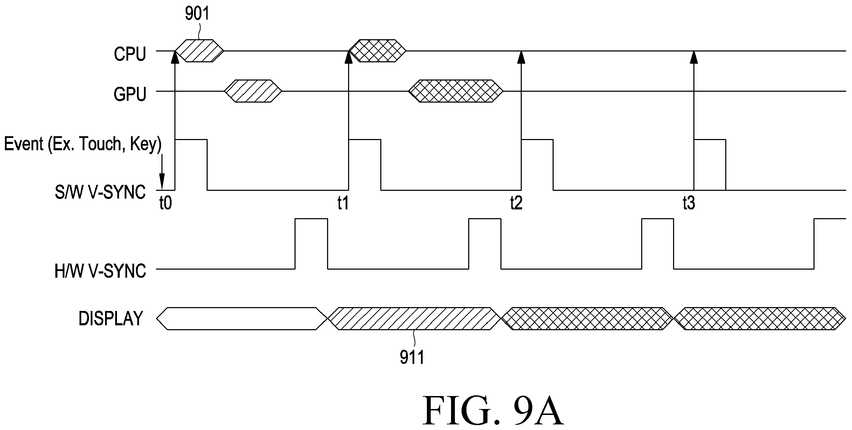

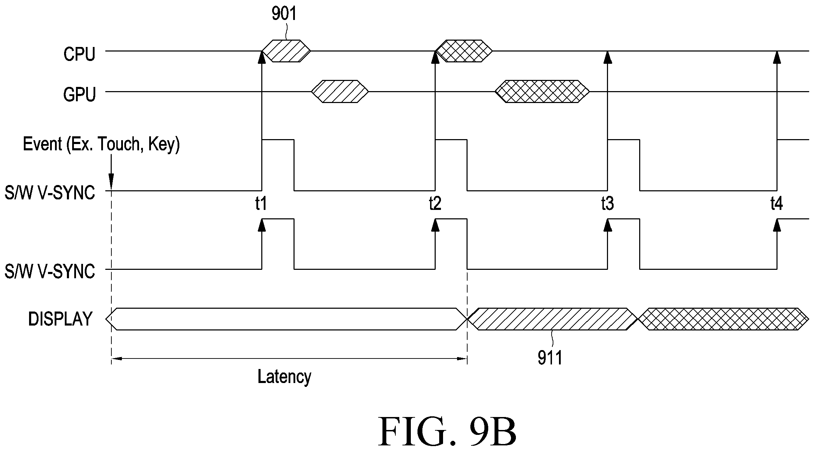

FIG. 9A is a diagram illustrating an example of output of a software vertical synchronization signal when responsiveness is improved in an electronic device according to an embodiment, and FIG. 9B is a diagram illustrating an example of output of a software vertical synchronization signal when responsiveness is not improved in an electronic device according to an embodiment.

Referring to FIG. 9A, according to an embodiment, in response to a request for rendering of a current frame (hereinafter, referred to as a first frame 901), a software module may immediately output a software vertical synchronization signal at a first point in time (t0) based on a quick response event. The software module may begin data processing (e.g., rendering) of the current frame at t0, and may perform data processing of the current frame until a subsequent software vertical synchronization signal is output. A CPU may calculate content to be displayed in association with the data of the current frame at t0 at which a software vertical synchronization signal to which offset information is applied is output, and upon completion of the calculation, may transmit the same to a GPU, and the GPU may perform frame data processing (e.g., conversion processing, combination processing, rendering processing) and may transfer a data processing result to a frame buffer area. A display may output a hardware vertical synchronization signal in designated cycles, may delay display of the first frame 901 up to 11, and may display a frame data processing result 911 of the first frame 901 from t1 to t2. As illustrated in FIG. 9B, in case that offset information is not applied, a software vertical synchronization signal may be output such that it is synchronized with a hardware vertical synchronization signal output in regular cycles (e.g., for each designated FPS), and thus the display may continuously delay display of the first frame 901 up to a t2 of a subsequent cycle (e.g., a maximum of two frames).

Comparing FIG. 9A and FIG. 9B, by immediately outputting a software vertical synchronization signal, display of the frame 901 is not delayed during two cycles, and a CPU immediately responds and performs data processing on the first frame 901, as illustrated in FIG. 9B. Accordingly, the display immediately displays the first frame 901 when a subsequent hardware vertical synchronization signal is output after a software vertical synchronization signal is output, and thus responsiveness for frame data processing may be improved and a display delay time of the display may be reduced. In addition, various effects directly or indirectly recognized from the document may be provided.

According to an embodiment, an operation method of an electronic device (e.g., the electronic device 101 of FIG. 1 FIG. 2, and FIG. 3) may include an operation of allocating, via a software module (e.g., the software module 201 of FIG. 2 and FIG. 3) of the electronic device, a hardware resource needed for rendering the frame in response to a request for rendering a frame to be displayed in a display (e.g., the display module 160 of FIG. 1) of the electronic device.

According to an embodiment, the method may include an operation of identifying whether the frame is changed.

According to an embodiment, the method may include an operation of obtaining, based on identifying a change of the frame, a changed system parameter of the frame.

According to an embodiment, the method may include an operation of obtaining, from a memory of the electronic device, offset information set to correspond to the changed system parameter and an operation of outputting a software vertical synchronization signal by applying the offset information.

According to an embodiment, the offset information may include an average value of time difference value between a hardware vertical synchronization signal and the software vertical synchronization signal, and may be stored in the memory to correspond to the system parameter and frame dropping-related information.

According to an embodiment, the method may further include an operation of outputting, based on occurrence of a quick response event, the software vertical synchronization signal, irrespective of a cycle of the hardware vertical synchronization signal.

According to an embodiment, the software vertical synchronization signal may be immediately output when a quick response event occurs by a synchronization timer included in the software module.

According to an embodiment, a time at which the software vertical synchronization signal is output may be earlier than a time at which the hardware vertical synchronization signal is output.

According to an embodiment, the operation of identifying whether the frame is changed may include an operation of identifying a change of the frame based on a change of a system parameter of the frame, a change in graphics related information of the frame, or occurrence of frame dropping.

According to an embodiment, the method may further include an operation of monitoring a hardware vertical synchronization signal and the software vertical synchronization signal, an operation of obtaining a time difference value between the hardware vertical synchronization signal and the software vertical synchronization signal, and an operation of updating, based on the time difference value, a time difference average value stored in the memory.

According to an embodiment, the method may include an operation of identifying whether frame dropping occurs, an operation of obtaining, based on identifying occurrence of frame dropping, a frequency of frame dropping or an average time, an operation of storing the frequency of frame dropping and the average time in the memory to correspond to a system parameter based on the frame dropping, an operation of setting a new software vertical synchronization signal by applying offset information set to correspond to the system parameter based on the frame dropping, and an operation of outputting the new software vertical synchronization signal.

According to an embodiment, the system parameter may include at least one of FPS, a CPU clock, a GPU clock, or a heat generation state.

According to an embodiment, in a non-transitory computer-readable recording medium storing a program, the program may include a software module which, when executed by a processor of an electronic device, causes the processor to perform, an operation of allocating, based a request for rendering a frame to be displayed in a display of the electronic device, a hardware resource needed for rendering the frame, an operation of identifying whether the frame is changed, an operation of obtaining, based on identifying a change of the frame, a changed system parameter of the frame, an operation of obtaining, from a memory of the electronic device, offset information set to correspond to the changed system parameter, and an operation of outputting a software vertical synchronization signal by applying the offset information.

According to an embodiment, in a non-transitory computer-readable recording medium storing a program, the program may include the software module which, when executed by a processor of an electronic device, causes the processor to perform, an operation of immediately outputting, based on occurrence of a quick response event, the software vertical synchronization signal.

According to an embodiment, the software vertical synchronization signal may be immediately output when a quick response event occurs by a synchronization timer included in the software module, irrespective of a cycle of a hardware vertical synchronization signal. According to an embodiment, a time at which the software vertical synchronization signal is output may be earlier than a time at which the hardware vertical synchronization signal is output. According to an embodiment, the offset information may include an average value of time difference values between hardware vertical synchronization signals and software vertical synchronization signals, and may be stored in the memory to correspond to the system parameter and frame dropping-related information.

According to an embodiment, in a non-transitory computer-readable recording medium storing a program, the program may include the software module which, when executed by a processor of an electronic device, causes the processor to perform, an operation of identifying whether frame dropping occurs, an operation of obtaining, based on identifying occurrence of frame dropping, a frequency of frame dropping or an average time, an operation of storing the frequency of frame dropping and the average time in the memory to correspond to a system parameter based on the frame dropping, an operation of setting a new software vertical synchronization signal by applying offset information set to correspond to the system parameter based on the frame dropping; and an operation of outputting the new software vertical synchronization signal.

Embodiments disclosed in the document are provided in order to describe the technical contents and help understanding of the same, and do not limit the scope of the disclosure. Therefore, it should be understood that the scope of the disclosure includes all modifications based on the technical ideal of the disclosure or various other embodiments.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a memory (130) including a software module (201);
a display (160); and
at least one processor (120) electrically connected to the memory and the display,
wherein the software module (201) is configured to, when executed by the at least one processor (120), cause the electronic device (101) to: identify (401) whether rendering a frame to be displayed in the display is requested;
if a request for rendering the frame is identified, allocate (403) a hardware resource needed for rendering the frame;
identify (405) whether the frame is changed;
based on identifying a change of the frame, obtain a changed system parameter of the frame;
obtain (407), from the memory, offset information set to correspond to the changed system parameter; and
output (409) a software vertical synchronization signal set by applying the offset information.

2. The electronic device of claim 1, wherein the offset information includes an average value of time difference value between a hardware vertical synchronization signal and the software vertical synchronization signal, and is stored in the memory to correspond to the system parameter and frame dropping-related information.

3. The electronic device of claim 1 or claim 2,
wherein the software module is configured to, when executed by the at least one processor, cause the electronic device to output, based on occurrence of a quick response event, the software vertical synchronization signal, irrespective of a cycle of the hardware vertical synchronization signal;
wherein the hardware vertical synchronization signal is generated in predetermined cycles and
wherein the quick response event includes a user input and/or fingerprint recognition.

4. The electronic device of claim 3, wherein the software vertical synchronization signal is immediately output in case that a quick response event occurs, irrespective of the cycle of the hardware vertical synchronization signal, and wherein the software vertical synchronization signal is output before a time at which the hardware vertical synchronization signal for a current cycle is output.

5. The electronic device of any one of claim 1 to claim 4, wherein the software module is configured to, when executed by the at least one processor, cause the electronic device to identify a change of the frame based on a change of a system parameter of the frame, a change in graphics related information of the frame, or occurrence of frame dropping.

6. The electronic device of any one of claim 1 to claim 5, wherein the software module is configured to, when executed by the at least one processor, cause the electronic device to:
monitor a hardware vertical synchronization signal and the software vertical synchronization signal;
obtain a time difference value between the hardware vertical synchronization signal and the software vertical synchronization signal; and
update, based on the time difference value, the time difference average value stored in the memory.

7. The electronic device of any one of claim 1 to claim 6, wherein the software module is configured to, when executed by the at least one processor, cause the electronic device to:
identify whether frame dropping occurs;
based on identifying occurrence of frame dropping, obtain a frequency of frame dropping or an average time of frame dropping;
store the frequency of frame dropping and the average time of frame dropping in the memory as an updated system parameter based on the frame dropping; and
output a new software vertical synchronization signal set by applying offset information based on the updated system parameter, and
wherein the system parameter comprises at least one of Frames Per Second, FPS, a Central Processing Unit, CPU, clock, a Graphics Processing Unit, GPU, clock, or a heat generation state; and
wherein the average time of frame dropping is an average of the delay times of frame droppings.

8. The electronic device of any one of claim 1 to claim 7, wherein the software module comprises:
a graphics framework configured to process rendering of the frame; and
a synchronization module,
wherein the synchronization module comprises:
a synchronization core configured to identify, based on the frame rendering request, a change of the frame, and obtain the offset information;
a synchronization timer configured to output the software vertical synchronization signal;
a synchronization data module configured to manage the offset information; and
a synchronization monitor configured to monitor the software vertical synchronization signal and a hardware vertical synchronization signal output from the display module.

9. An operation method of an electronic device (101), wherein the method is performed by a software module (201) of the electronic device and comprises:
identifying (401) whether rendering a frame to be displayed in a display (160) of the electronic device is requested;
if a request for rendering the frame is identified, allocating (403) a hardware resource needed for rendering the frame;
identifying (405) whether the frame is changed;
based on identifying a change of the frame, obtaining a changed system parameter of the frame;
obtaining, from a memory of the electronic device, offset information set to correspond to the changed system parameter; and
outputting a software vertical synchronization signal set by applying the offset information.

10. The method of claim 9, wherein the offset information is stored in the memory to correspond to the system parameter and frame dropping-related information.

11. The method of claim 9 or claim 10, further comprising outputting, based on occurrence of a quick response event, the software vertical synchronization signal, irrespective of a cycle of the hardware vertical synchronization signal, wherein the hardware vertical synchronization signal is generated in predetermined cycles;
wherein the quick response event includes a user input and/or fingerprint recognition;
wherein the software vertical synchronization signal is immediately output in case that a quick response event occurs by a synchronization timer included in the software module, and
wherein the software vertical synchronization signal is output before a time at which the hardware vertical synchronization signal for a current cycle is output.

12. The method of any one of claim 9 or claim 11, wherein the identifying of whether the frame is changed comprises identifying the change of the frame based on a change of a system parameter of the frame, a change in graphics related information of the frame, or occurrence of frame dropping.

13. The method of any one of claim 9 to claim 12, further comprising:
monitoring a hardware vertical synchronization signal and the software vertical synchronization signal;
obtaining a time difference value between the hardware vertical synchronization signal and the software vertical synchronization signal; and
updating, based on the time difference value, a time difference average value stored in the memory.

14. The method of any one of claim 9 to claim 13, comprising:
identifying whether frame dropping occurs;
based on identifying occurrence of frame dropping, obtaining a frequency of frame dropping or an average time of frame dropping;
storing the frequency of frame dropping and the average time of frame dropping in the memory as an updated system parameter based on the frame dropping;
setting a new software vertical synchronization signal by applying offset information based on the updated system parameter; and
outputting the new software vertical synchronization signal; wherein the system parameter comprises at least one of Frames Per Second, FPS, a Central Processing Unit, CPU, clock, a Graphics Processing Unit, GPU, clock, or a heat generation state; and
wherein the average time of frame dropping is an average of the delay times of frame droppings.

15. A non-transitory computer-readable recording medium storing a program, wherein the program comprises a software module which, when executed by a processor (120) of an electronic device (101), causes the electronic device to perform:
identifying (401) whether rendering a frame to be displayed in the display (160) is requested;
if a request for rendering the frame is identified, allocating (403) a hardware resource needed for rendering the frame;
identifying whether the frame is changed;
based on identifying a change of the frame, obtaining a changed system parameter of the frame;
obtaining, from a memory of the electronic device, offset information set to correspond to the changed system parameter; and
outputting a software vertical synchronization signal set by applying the offset information.
